# EUROPÄISCHE PATENTANMELDUNG

(11) **EP 3 266 721 A1**
(43) Veröffentlichungstag der Anmeldung: **10.01.2018**
(21) Anmeldenummer: 17172120.2
(22) Anmeldetag: 22.05.2017
(51) Int. Cl.: B65C 9/02, B65C 1/02, B65B 35/44, B65G 47/08, B65G 57/03, B65G 57/11

(54) **ETIKETTIERMASCHINE UND VERFAHREN ZUR HERSTELLUNG VON MULTIPACKS**

(30) Priorität: 04.07.2016 DE 102016212130
(71) Anmelder: MULTIVAC Marking & Inspection GmbH & Co. KG, 32130 Enger (DE)
(72) Erfinder: AUSTERMEIER, Georg, 33161 Hövelhof (DE); FRIEDHOFF, Hauke, 32052 Herford (DE)
(74) Vertreter: Grünecker Patent- und Rechtsanwälte PartG mbB

(57) **Zusammenfassung**

Die Erfindung betrifft eine Etikettiermaschine 1 zur Herstellung jeweiliger eine Gruppe von Produkten P umfassender Multipacks M, wobei die Etikettiermaschine 1 eine Fördervorrichtung 2 mit einem Fördermodul 3 zum Bilden einer Gruppe aus einer vorbestimmten Vielzahl von Produkten P und zum Bereitstellen der Gruppe von Produkten P für einen Etikettiervorgang zur Herstellung eines Multipacks M umfasst, wobei die Etikettiermaschine 1 mindestens einen Etikettierer 8 umfasst, wobei das Fördermodul 3 dazu ausgebildet ist, die Gruppe von Produkten P dem Etikettierer 8 für den Etikettiervorgang bereitzustellen, wobei das Fördermodul 3 über mindestens zwei Fördereinheiten verfügt, die jeweils mindestens einen Mitnehmer 14a, b umfassen, und wobei die Fördereinheiten 10a, b derart einzeln ansteuerbar sind, dass zwei zu unterschiedlichen Fördereinheiten 10a, b gehörige Mitnehmer 14a, b zum Bereitstellen der Gruppe von Produkten P für den Etikettiervorgang als eine Fixierung zusammenwirken. Die Erfindung betrifft weiterhin ein Verfahren zum Herstellen jeweiliger eine Gruppe von Produkten P umfassender Multipacks M mittels einer Etikettiermaschine 1.

## Beschreibung

Die Erfindung bezieht sich auf eine Etikettiermaschine gemäß dem Anspruch 1 sowie auf ein Verfahren zur Herstellung jeweiliger eine Gruppe von Produkten umfassender Multipacks gemäß dem unabhängigen Verfahrensanspruch 14.

Multipacks im Sinne der Erfindung sind zu einer Einheit durch mindestens ein Etikett gruppierte vorverpackte Einzelprodukte.

Einzelprodukte, die bei der Erfindung zu Multipacks verarbeitet werden können, sind insbesondere Einzelprodukte mit einem Verpackungsinhalt, bestehend aus einer Vielzahl von einzelnen Körpern, die innerhalb einer Verpackung des Einzelprodukts untereinander in einer beliebigen, unregelmäßigen Anordnung aufgenommen sind, wobei die einzelnen Körper relativ zueinander beliebige Positionen innerhalb der Verpackung einnehmen können.

Einzelprodukte, die bei der Erfindung zu Multipacks verarbeitet werden können, sind insbesondere auch Einzelprodukte mit einem Verpackungsinhalt, bestehend aus mindestens einem Körper, dessen Form mittels einer von außerhalb auf das Einzelprodukt wirkenden Kraft leicht verformbar und/oder der leicht innerhalb des Verpackungsmaterials verdrängbar ist.

Einzelprodukte, die bei der Erfindung zu Multipacks verarbeitet werden können, sind insbesondere auch Einzelprodukte mit einem Verpackungsinhalt, bestehend aus mindestens einem Körper, dessen Volumen wesentlich kleiner ist als das eigentlich befüllbare Verpackungsvolumen der Verpackung, d.h., dass der Körper keine der Verpackung Gestalt gebende Größe besitzt.

Die voranstehend definierten bevorzugten Einzelprodukte, die im Rahmen der Erfindung zur Herstellung von Multipacks verwendet werden können, sind im Folgenden unter dem Begriff "forminstabile Produkte" zusammengefasst.

Im Gegensatz dazu sind im Folgenden unter dem Begriff "formstabile Produkte" Einzelprodukte mit einem Verpackungsinhalt gemeint, der aus einem im Wesentlichen starren Körper oder aus einem System relativ zueinander fest angeordneter einzelner starrer Körper besteht, die zusammen eine feste Anordnung haben, wobei der Verpackungsinhalt für die Verpackung im Wesentlichen formbestimmend ist.

EP 0 778 203 B1 offenbart eine Vorrichtung zum Gruppieren von Einzelverpackungen, wie sie auch zur Herstellung von Multipacks einsetzbar wäre. Dafür kommt ein Fachband mit in Transportrichtung gereihten Fächern für die Aufnahme einzelner Verpackungen zum Einsatz. Das Fachband umfasst einen Zahnriemen sowie daran in festem Abstand zueinander befestigte, fächerbildende Mitnehmer. Die dadurch am Fachband ausgebildeten Fächer sind jeweils exakt auf das Produktmaß eines einzelnen Produkts abgestimmt.

Nachteilig daran ist, dass das Fachband ausschließlich zur Herstellung von Multipacks aus Einzelprodukten mit formstabilem Inhalt geeignet ist, beispielsweise zur Herstellung von Multipacks aus formstabilen Süßwaren, insbesondere einzelnen Keks-Produkten. Dabei können nämlich die im Fachband übereinander angeordneten einzelnen Produkte selbst durch ihren formstabilen Inhalt eine als Widerlager ausreichend stabile und gleichmäßige Oberfläche zum Aufbringen eines Etiketts darauf zur Verfügung stellen. Ein vergleichbares Etikettieren lässt sich mittels des Fachbands allerdings nicht mit Produkten forminstabilen Inhalts durchführen. Solche Produkte bilden nämlich, wenn sie lose in den jeweiligen Fächern des Fachbands liegen, keine als Widerlager geeignete Oberfläche zum Aufkleben eines Etiketts aus. Deshalb würden sie durch das Andrücken des Etiketts darauf weg- bzw. zusammengedrückt werden. Dies hat zur Folge, dass das Etikett nicht genau aufgeklebt werden kann.

Aufgabe der Erfindung ist es, eine Etikettiermaschine sowie ein Verfahren zur verbesserten Herstellung von Multipacks unabhängig der zu gruppierenden Produkte zur Verfügung zu stellen.

Diese Aufgabe wird gelöst mittels einer Etikettiermaschine gemäß dem Anspruch 1 sowie mittels eines Verfahrens gemäß dem unabhängigen Anspruch 14. Verbesserte Weiterbildungen der Erfindung sind Gegenstand der Unteransprüche.

Die Erfindung betrifft eine Etikettiermaschine zur Herstellung jeweiliger eine Gruppe von Produkten umfassender Multipacks, die jeweils aus vorverpackten Einzelprodukten durch mindestens ein Etikett zu einer Einheit gruppiert sind.

Die erfindungsgemäße Etikettiermaschine umfasst eine Fördervorrichtung mit einem Fördermodul zum Bilden einer Gruppe aus einer vorbestimmten Vielzahl von Produkten und zum Bereitstellen der Gruppe von Produkten für einen Etikettiervorgang zur Herstellung eines Multipacks. Weiter umfasst die Etikettiermaschine mindestens einen Etikettierer, wobei das Fördermodul dazu ausgebildet ist, die Gruppe von Produkten dem Etikettierer für den Etikettiervorgang bereitzustellen.

Erfindungsgemäß verfügt das Fördermodul über mindestens zwei Fördereinheiten, die jeweils mindestens einen Mitnehmer umfassen, wobei die Fördereinheiten derart einzeln ansteuerbar sind, dass zwei zu unterschiedlichen Fördereinheiten gehörige Mitnehmer zum Bereitstellen der Gruppe von Produkten für den Etikettiervorgang als eine Fixierung zusammenwirken.

Bei der Erfindung interagieren die jeweiligen Mitnehmer der Fördereinheiten, indem die Fördereinheiten separat angesteuert werden, um die Gruppe von Produkten zu bilden und diese für den Etikettiervorgang zu fixieren. Der modularisierte Aufbau des Fördermoduls ermöglicht ein funktionales Zusammenspiel der jeweiligen Mitnehmer, sodass diese trotz deren Zugehörigkeit zu unterschiedlichen Fördereinheiten gezielt zusammenarbeiten können. Das Fördermodul kann für einen beliebigen Betrieb unterschiedlicher Multipacks problemlos, vornehmlich automatisch angepasst werden, ohne dass es dabei am Fördermodul zu aufwändigen Umrüstarbeiten kommt.

Die erfindungsgemäße Etikettiermaschine eignet sich besonders gut zur Herstellung von Multipacks aus einzelnen Produkten mit forminstabilem Inhalt, insbesondere zur Herstellung von Multipacks aus forminstabilen Süßwaren. Durch das Zusammendrücken der zwischen den Mitnehmern gestapelten Produkte lassen sich deren Inhalte durch Formschluss derart von Produkt zu Produkt gegenseitig ausgleichen, dass dadurch insgesamt ein stabiler Stapel dem Etikettierer bereit gehalten werden kann, wodurch insbesondere entlang mindestens einer zum Andrücken des Etiketts vorgesehenen Seite der gestapelten Produkte eine stabile Oberfläche zustande kommt, die als Widerlager für einen genauen Etikettiervorgang zur Verfügung steht. Darauf lässt sich das Etikett genau und stabil andrücken.

Durch das Zusammendrücken der jeweiligen zwischen den Mitnehmern gestapelten Produkte lassen sich diese für den Etikettiervorgang fixieren und bilden dadurch eine stabile Oberfläche für das Andrücken des Etiketts zur Herstellung eines Multipacks aus. Dieses Prinzip lässt sich sowohl mit Produkten mit formstabilem Inhalt als auch mit Produkten mit forminstabilem Inhalt zur Herstellung von Multipacks anwenden, sodass die erfindungsgemäße Etikettiermaschine unabhängig von der Art der zu gruppierenden Produkte für einen flexiblen Einsatz geeignet ist.

Bei der Erfindung hat das Fördermodul keine starre Anordnung daran zur Aufnahme einzelner Produkte gebildeter Fächer, weil die jeweiligen Fördereinheiten für einen selbständigen Betrieb ausgebildet sind, sodass die daran vorgesehenen jeweiligen Mitnehmer untereinander beliebig als Aufnahme zum Stapeln der Gruppe sowie als Fixierung für den Etikettiervorgang zusammenwirken können. Das heißt, dass bei der Erfindung die Mitnehmer jeweiliger Fördereinheiten derart interagieren, dass sie zusammen, trotz Vorliegen separater Fördereinheiten, eine passende Aufnahme für die Produkte sowie Fixierung dafür bilden.

Mittels geeigneter Ansteuerung der jeweiligen Fördereinheiten können Multipacks varüerender Stapelgröße hergestellt werden. Selbst wenn Produkte untereinander unterschiedliche Volumina aufweisen, stellt dies für das anpassungsfähige Fördermodul bei der Erfindung kein Problem dar. Das Fördermodul ist nämlich für einen flexiblen Betrieb ausgelegt. Außerdem kann der Betrieb des Fördermoduls genau auf den Betrieb dafür vorgesehener Zuführvorrichtungen und/oder Abführvorrichtungen abgestimmt werden. Insgesamt betrachtet ist das Fördermodul wegen seiner autonomen Fördereinheiten besonders anpassungsfähig hinsichtlich einer Anzahl zu gruppierender Produkte sowie deren Inhalt und lässt sich hervorragend in den Betrieb eines erweiterten Fördersystems integrieren.

Durch den modularisierten Aufbau des bei der Erfindung zum Einsatz kommenden Fördermoduls kann das Fördermodul leicht erweitert werden und lässt sich problemlos in unterschiedlichen Etikettiermaschinentypen einsetzen.

Vorzugsweise wirken die beiden Mitnehmer als Parallelgreifer zusammen und sind dazu ausgebildet, zum Bereitstellen der Gruppe von Produkten für den Etikettiervorgang die Gruppe von Produkten mittels Kraftpaarung zusammenzuhalten. Dadurch kann verhindert werden, dass Produkte beim Etikettiervorgang in der durch die beiden Mitnehmer gebildeten Fixierung verrutschen.

Vorzugsweise ist zum Bereitstellen der Gruppe von Produkten für den Etikettiervorgang ein im Betrieb der Fördereinheiten zwischen den Mitnehmern vorliegender erster Abstand nach Aufnahme der Produkte derart zu einem zweiten Abstand reduzierbar, dass ein Halten der Gruppe von Produkten zwischen den Mitnehmern durch das Ausüben eines Druckes auf die Gruppe von Produkten herstellbar ist. Dadurch können sich insbesondere bei forminstabilen Produkten deren Inhalte gegenseitig ausgleichen und eine geeignete Oberfläche zum Ankleben des Etiketts daran ausbilden. Vorzugsweise kann der zum Ausüben des Druckes auf die Gruppe von Produkten eingestellte zweite Abstand dadurch erreicht werden, indem mindestens eine der Fördereinheiten relativ zu einer anderen der Fördereinheiten für einen beschleunigten oder verlangsamten Betrieb ansteuerbar ist/sind.

Vorzugsweise ist bei der Erfindung die für den Etikettiervorgang bereitgestellte Gruppe von Produkten zwischen zwei Mitnehmern fixiert. Dadurch ergibt sich die Möglichkeit, dass dazwischen die jeweiligen Inhalte der übereinandergestapelten Produkte aneinander gedrückt werden können. Folglich geben sich die Produkte gegenseitig ausreichend Stabilität. Insbesondere bei Produkten forminstabilen Verpackungsinhalts können sich die jeweiligen Inhalte von Produkt zu Produkt ausgleichen, wodurch die gestapelten Produkte insgesamt als Paket betrachtet formstabil sind und deshalb darauf eine genaue Etikettierung stattfinden kann.

Bevorzugterweise sind die Mitnehmer der jeweiligen Fördereinheiten derart an den Fördereinheiten befestigt, dass sie in Förderrichtung des Fördermoduls gesehen in einer Flucht übereinander entlang einer der Fördereinheiten positionierbar sind. Das Zusammenwirken der Mitnehmer als Fixierung ist dadurch besonders gut möglich. Dafür können einzelne Mitnehmer beispielsweise mittels auskragenden Abstandsleisten an den jeweiligen Fördereinheiten befestigt sein, damit sie zueinander in Förderrichtung des Fördermoduls gesehen übereinander entlang einer der Fördereinheiten positionierbar sind.

Vorzugsweise sind die Fördereinheiten Seite an Seite zueinander angeordnet, wobei jeweilige Förderrichtungen der Fördereinheiten für den Transport der Gruppe von Produkten zueinander parallel sind. Diese Anordnung baut kompakt und bietet insbesondere für die Ansteuerung der jeweiligen Fördereinheiten zur Aufnahme und zur Fixierung der Gruppe von Produkten technische Vorteile. Außerdem lassen sich entlang der parallelen Förderrichtungen die jeweiligen Mitnehmer der Fördereinrichtungen zum Bilden einer Aufnahme für die Gruppe von Produkten sowie zum Bilden der Fixierung gut zueinander regeln. Die parallel betriebenen Fördereinheiten arbeiten dabei sozusagen im Modul als Gruppe zusammen.

Besonders leistungsfähig ist die Etikettiermaschine dann, wenn das Fördermodul eine weitere dritte Fördereinheit mit mindestens einem Mitnehmer umfasst, wobei eine Förderrichtung der dritten Fördereinheit zu den jeweiligen Förderrichtungen der anderen Fördereinheiten parallel ist. Dadurch kann der Durchsatz hergestellter Multipacks deutlich erhöht werden, weil insbesondere bei dieser Ausführung das Fördermodul dazu in der Lage ist, während des Bereitstellens einer Gruppe von Produkten für den Etikettiervorgang zumindest teilweise zeitgleich schon eine neue Gruppe von Produkten zu bilden. Dies ermöglicht einen kontinuierlichen Herstellungsprozess.

Eine Ausführungsvariante der Erfindung sieht vor, dass die Etikettiermaschine eine Steuervorrichtung umfasst, die dazu konfiguriert ist, die Fördereinheiten unabhängig zueinander anzusteuern. Damit ist gemeint, dass die jeweiligen Geschwindigkeiten und/oder Beschleunigungen der Fördereinheiten einzeln ansteuerbar sind, sodass die daran positionierten Mitnehmer zum Bilden der Gruppe von Produkten sowie zum Bereitstellen der Gruppe von Produkten für den Etikettiervorgang zueinander koordiniert ansteuerbar sind. Die Steuervorrichtung kann gut in mindestens einen Regelkreis der Etikettiermaschine funktional eingebunden sein, sodass der Betrieb der Etikettiermaschine selbsttätig ablaufen kann.

Vorzugsweise ist an dem Fördermodul eine Kraftbegrenzungseinheit ausgebildet, anhand derer die vorbestimmte Kraft für das Zusammendrücken der Produkte einstellbar ist. Die Steuervorrichtung kann dazu konfiguriert sein, ab dem Erreichen der vorbestimmten Kraft die dabei zum Einsatz kommenden Mitnehmer mit gleicher Geschwindigkeit weiter zu fahren, bis die Etikettierung stattgefunden hat.

Vorzugsweise umfassen die Fördereinheiten jeweils zwei Mitnehmer. Dadurch kann die Produktionsrate erhöht werden. Die Mitnehmer können lösbar an den jeweiligen Fördereinheiten befestigt sein. Im Fördermodul bilden die jeweiligen Mitnehmer untereinander gewissermaßen fliegende Mitspieler, was im technischen Sinne der Erfindung bedeutet, dass sie immer wieder aufs Neue in unterschiedlichen Konstellationen zusammenwirken können.

Gemäß einer vorteilhaften Ausführung umfassen die Fördereinheiten jeweils einen endlosen Zahnriemen sowie jeweils ein Paar Führungsrollen zum Spannen und Führen der jeweiligen Zahnriemen. Die jeweiligen Führungsrollen können gemeinsame Drehachsen aufweisen, sodass die jeweiligen Fördereinheiten nebeneinander im Modul betrachtet ähnliche Förderwege haben. Wegen ihres konstruktiv ähnlichen Aufbaus können die jeweiligen Fördereinheiten kostengünstig hergestellt werden und bieten eine günstige Grundlage für Service- und/oder Reinigungszwecke.

Vorzugsweise umfassen die Fördereinheiten des Fördermoduls jeweils einen eigenen Servomotor als Antrieb. Damit lassen sich die jeweiligen Fördereinheiten autonom verstellen. Die Servomotoren können in unmittelbarer Nähe zu den Führungsrollen der Fördereinheiten angeordnet sein, wodurch ein kompakter Aufbau des Fördermoduls innerhalb der Etikettiermaschine möglich ist.

Eine vorteilhafte Ausführungsform sieht vor, dass das Fördermodul schräggestellt angeordnet ist, sodass die jeweiligen Förderrichtungen der Fördereinheiten in vertikaler Projektionsebene betrachtet einen spitzen Winkel zur Horizontalen einschließen. Der spitze Winkel ist dabei insbesondere als Winkel zwischen 60° und 80° ausgebildet. Dies bietet vor allem Vorteile bei der Aufnahme und Gruppierung der Produkte am Fördermodul, weil dadurch von einer Zuführvorrichtung aus das Beschicken einzelner Produkte auf den die Gruppe tragenden Mitnehmer mit hoher Geschwindigkeit ablaufen kann, ohne dass dabei die Produkte vom Mitnehmer herunterfallen. Eine Schrägstellung des Fördermoduls bietet auch zusätzlichen Halt für die Gruppe übereinandergestapelter Produkte auf dem Weg zum Etikettierer. Weiter vorteilhaft wäre es, wenn das Fördermodul und der Etikettierer aneinandergekoppelt sind, wodurch eine Neuausrichtung des Fördermoduls gleichzeitig eine dementsprechende Neuausrichtung des Etikettierers bewirkt, sodass der Etikettierer relativ zu den ihm hingeführten Gruppen von Produkten eine vorbestimmte Position beibehält.

Vorzugsweise umfasst die Fördervorrichtung ein Zuführband zum Bestücken des Fördermoduls mit Produkten und/oder ein Abführband zum Abtransport der hergestellten Multipacks. Vorzugsweise ist das Zuführband in horizontaler Ausrichtung angeordnet und dazu konfiguriert, einzelne Produkte dem Fördermodul an einem zwischen dem Fördermodul und einem dem Fördermodul zugewandten Ende des Zuführbands ausgebildeten Übergabebereich zu übergeben. Vorzugsweise ist das Abführband parallel versetzt zum Zuführband unterhalb des Fördermoduls angeordnet.

Gemäß einer Ausführungsvariante ist ein unterer Umlenkbereich des Fördermoduls in horizontaler Projektionsebene betrachtet zumindest abschnittsweise oberhalb des Abführbands positioniert. Dadurch kann sichergestellt werden, dass ein hergestellter Multipack selbsttätig beim Durchlaufen des unteren Umlenkbereichs des Fördermoduls auf das Abführband fällt und von diesem wegtransportiert werden kann. Hierbei können die den Multipack haltenden Mitnehmer beim Durchlaufen des unteren Umlenkbereichs automatisch öffnen, sodass der Multipack zum Abwurf auf das Abführband freigegeben werden kann. Alternativ oder zusätzlich könnte anstelle des Abführbands auch eine Rutsche unterhalb des Fördermoduls positioniert sein, die die fertiggestellten Multipacks an ein nachgeordnetes Förderband oder direkt in einen Karton leitet.

Eine Variante sieht vor, dass zumindest abschnittsweise eine Führung entlang der Fördervorrichtung zum Führen der Produkte angeordnet ist. Vorzugsweise ist die Führung an einem zum Fördermodul hin gewandten Ende des Zuführbands befestigt. Bevorzugterweise umfasst die Führung zwei parallel verlaufende Führungsschienen, die in Förderrichtung des Fördermoduls angeordnet sind, wobei die Gruppe von Produkten zwischen den Führungsschienen zum Etikettierer transportierbar ist. Dadurch kann verhindert werden, dass die übereinander gestapelten Produkte vor dem Etikettiervorgang seitlich aus der Fixierung rutschen.

Vorzugsweise ist dem Zuführband eine Lichtschranke zugeordnet, deren Einsatz dafür sorgt, dass die auf dem Zuführband einzeln zur Verfügung gestellten Produkte ordnungsgemäß an das Fördermodul übergeben werden. Die Lichtschranke ist vorzugsweise an einem dem Fördermodul zugewandten Ende des Zuführbands angeordnet, um dort antreffende Produkte einzeln zu erfassen, sodass dementsprechend eine Ansteuerung der Fördereinheiten stattfinden kann.

Die Erfindung betrifft desweiteren ein Verfahren zum Herstellen jeweiliger eine Gruppe von Produkten umfassender Multipacks mittels einer Etikettiermaschine. Bei dem erfindungsgemäßen Verfahren wird eine Gruppe aus einer vorbestimmten Vielzahl von Produkten mittels eines Fördermoduls gebildet und anschließend mittels des Fördermoduls für einen Etikettiervorgang zur Herstellung eines Multipacks bereitgestellt, wobei mehrere Fördereinheiten des Fördermoduls einzeln derart angesteuert werden, dass zwei zu unterschiedlichen Fördereinheiten gehörige Mitnehmer zum Bereitstellen der Gruppe von Produkten für den Etikettiervorgang als eine Fixierung zusammenwirken.

Vorzugsweise greifen die beiden Mitnehmer mittels Kraftpaarung die Gruppe von Produkten, sodass sich ein forminstabiler Inhalt von Produkt zu Produkt mittels Formschluss ausgleichen kann, wodurch sich die Produkte gegenseitig innerhalb der Gruppe Stabilität geben. Dadurch können die jeweiligen im Paket einzeln übereinander gestapelten Produkte eine ausreichend stabile Oberfläche als Widerlager für eine zum Fixieren des Etiketts angewandte Andrückkraft ausbilden, sodass eine genaue und sichere Befestigung des Etiketts darauf zum Bilden des Multipacks ermöglicht wird.

Vorzugsweise werden die Fördereinheiten derart gesteuert, dass sich zum Bereitstellen der Gruppe von Produkten für den Etikettiervorgang ein im Betrieb der Fördereinheiten zwischen den Mitnehmern vorliegender erster Abstand nach Aufnahme der Produkte derart zu einem zweiten Abstand reduziert, wodurch ein Halten der Gruppe von Produkten zwischen den Mitnehmern durch das Ausüben eines Druckes auf die Gruppe von Produkten hergestellt wird. Dadurch können sich insbesondere bei forminstabilen Produkten deren Inhalte gegenseitig ausgleichen und eine geeignete Oberfläche zum Ankleben des Etiketts daran ausbilden.

Vorzugsweise werden die einzelnen übereinander auf Kontakt zwischen den beiden Mitnehmern gestapelten Produkte forminstabilen Inhalts derart von den beiden Mitnehmern zusammengedrückt, dass sich durch das Zusammendrücken der Gruppe von Produkten deren forminstabiler Inhalt von Produkt zu Produkt mittels Formschluss ausgleicht, sodass sich die Produkte gegenseitig innerhalb der Gruppe Stabilität geben. Das Etikett zum Herstellen eines Multipacks lässt sich dadurch ausreichend stark und genau auf der Gruppe von Produkten andrücken.

Für einen besonders hohen Durchsatz herzustellender Multipacks werden mindestens drei Fördereinheiten im Fördermodul eingesetzt und einzeln angesteuert, sodass insbesondere bei dieser Ausführung das Bilden einer Gruppe von Produkten zumindest teilweise zeitgleich zum Etikettiervorgang einer vorausgehenden Gruppe stattfinden kann.

Ausführungsformen der Erfindung werden anhand der folgenden Figuren näher erläutert. Es zeigen:
- Figur 1: eine erfindungsgemäße Etikettiermaschine ohne Maschinenverkleidung in Perspektivdarstellung zur Herstellung von Multipacks,
- Figur 2: das Fördermodul der Etikettiermaschine beim Bilden einer Gruppe von Produkten,
- Figur 3: das Fördermodul beim Fixieren der Gruppe von Produkten für einen Etikettiervorgang und
- Figur 4: das Fördermodul mit einem daran hergestellten Multipack.

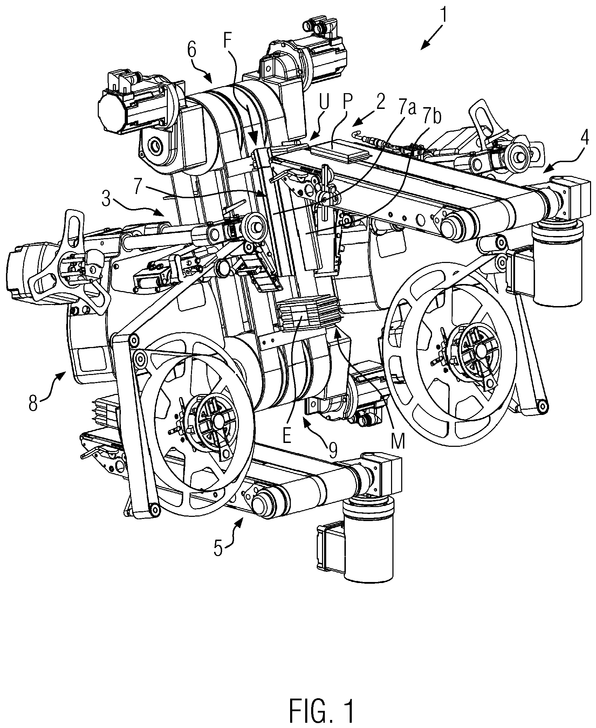

In den Figuren 1 bis 4 sind gleiche Komponenten durchgängig mit gleichen Bezugszeichen versehen.

Figur 1 zeigt eine Etikettiermaschine 1 zur Herstellung jeweiliger eine Gruppe von Produkten P umfassender Multipacks M. Zur besseren Darstellung dieser Ausführungsform ist die Etikettiermaschine 1 ohne Maschinenverkleidung dargestellt.

Die Etikettiermaschine 1 umfasst eine Fördervorrichtung 2 mit einem Fördermodul 3, einem Zuführband 4 und einem Abführband 5. Das Fördermodul 3, das Zuführband 4 und das Abführband 5 haben unterschiedliche Förderrichtungen, wobei eine Förderrichtung des Zuführbands 4 parallel versetzt zu einer Förderrichtung des Abführbands 5 verläuft. Das Fördermodul 3 hat eine Förderrichtung F, die im spitzen Winkel jeweils mit den Förderrichtungen des Zuführbands 4 und des Abführbands 5 zusammenläuft. Die Fördervorrichtung 2 bildet somit als Gesamtförderstrecke eine Stufe aus.

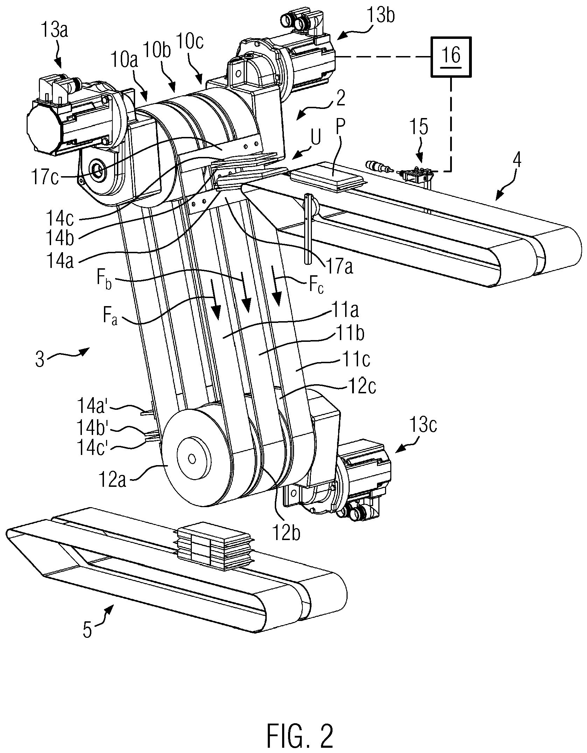

Zwischen einem oberen Umlenkbereich 6 des Fördermoduls 3 und einem zum Fördermodul 3 hingewandten Ende des Zuführbands 4 ist ein Übergabebereich U zum Stapeln einzelner Produkte P ausgebildet. Im Umlenkbereich U werden die Produkte P einzeln vom Zuführband 4 an das Fördermodul 3 übergegeben. Das Bilden der Gruppe von Produkten P wird später noch in Zusammenhang mit den Figuren 2 bis 4 näher erläutert.

Ferner zeigt Figur 1 eine Führung 7, die entlang des Fördermoduls 3 angeordnet ist. Die Führung 7 ist an dem zum Fördermodul 3 hingewandten Ende des Zuführbands 4 befestigt, ist allerdings entlang der Förderrichtung F des Fördermoduls 3 ausgerichtet. Gemäß Figur 1 umfasst die Führung 7 ein in Förderrichtung F angeordnetes, parallel verlaufendes Schienenpaar 7a, 7b, zwischen welchem eine Gruppe von Produkten P hin zu einem Etikettierer 8 der Etikettiermaschine 1 geführt werden kann. Der Etikettierer 8 ist dazu konfiguriert, mindestens ein Etikett E auf der Gruppe von Produkten P zur Herstellung des Multipacks M aufzubringen.

Figur 1 zeigt auch, dass ein unterer Umlenkbereich 9 des Fördermoduls 3 oberhalb eines hinteren Abschnitts des Abführbands 5 positioniert ist. Somit kann ein hergestellter Multipack M beim Durchlaufen des unteren Umlenkbereichs 9 zielsicher auf das Abführband 5 fallen.

Figur 2 zeigt das Fördermodul 3, das Zuführband 4 und das Abführband 5 gemeinsam in isolierter Darstellung. Das Fördermodul 3 umfasst drei Fördereinheiten 10a, b, c, die zueinander Seite an Seite angeordnet sind, wobei jeweilige Förderrichtungen Fa, b, c der Fördereinheiten 10a, b, c für den Transport der Gruppe von Produkten P zueinander parallel sind.

Die Fördereinheiten 10a, b, c umfassen jeweils einen endlosen Zahnriemen 11a, b, c sowie ein Paar Führungsrollen 12a, b, c zum Spannen und Führen der jeweiligen Zahnriemen 11a, b, c.

Gemäß Figur 2 umfasst das Fördermodul 3 für sämtliche Fördereinheiten 10a, b, c jeweils einen Servomotor 13a, b, c. Die funktionale Positionierung der jeweiligen Servomotoren 13a, b, c entsprechend Figur 2 kann jedoch geändert werden. Je nach Maschinenkonstruktion wäre eine Anordnung zweier der Servomotoren13a, b, c im unteren Umlenkbereich 9 genauso vorstellbar.

Figur 2 zeigt auch, dass am Übergabebereich U drei Mitnehmer 14a, b, c übereinander positioniert sind. Die Mitnehmer 14a, b, c sind an den entsprechenden Zahnriemen 11a, b, c befestigt. Die Mitnehmer 14a, c sind durch Abstandsleisten 17a, c an den jeweiligen Zahnriemen 11a, c befestigt. Dadurch sind die Mitnehmer 14a, c zusammen mit dem Mitnehmer 14b in einer Flucht übereinander entlang der Förderrichtung Fb der zwischen den Fördereinheiten 10a, c angeordneten Fördereinheit 10b positioniert. Ferner zeigt Figur 2, dass auf einer Rückseite des Fördermoduls 3 jeweilige weitere Mitnehmer 14a', b', c' zur Verfügung stehen.

Am Übergabebereich U bilden die beiden Mitnehmer 14a, b eine Aufnahme, um dazwischen eine Gruppe aus einer vorbestimmten Vielzahl von Produkten P für den Herstellungsprozess eines Multipacks M aufzunehmen.

Außerdem zeigt Figur 2 eine Lichtschranke 15, die zum Erfassen einzelner Produkte P am Ende des Zuführbands 4 angeordnet ist. Lediglich schematisch zeigt Figur 2 eine Steuervorrichtung 16 der Etikettiermaschine 1, die funktional mit der Lichtschranke 15 sowie den jeweiligen Servomotoren 13a, b, c des Fördermoduls 3 verbunden ist. Für das Regeln jeweiliger Geschwindigkeiten und/oder Beschleunigungen der einzelnen Fördereinheiten 10a, b, c können weitere nicht gezeigte Sensoreinheiten an der Etikettiermaschine 1 vorhanden sein, die funktional mit der Steuervorrichtung 16 verbunden sind. Die Steuervorrichtung 16 ist dazu konfiguriert, einen Betrieb des Fördermoduls 3 an sich zu regeln sowie insbesondere mit einem Betrieb des Zuführbands 4 und einem Betrieb des Etikettierers 8 (siehe Figur 1) derart aufeinander abzustimmen, dass das Bilden der Gruppe von Produkten P sowie das Bereitstellen dieser für den Etikettiervorgang zügig vorzugsweise kontinuierlich ablaufen kann.

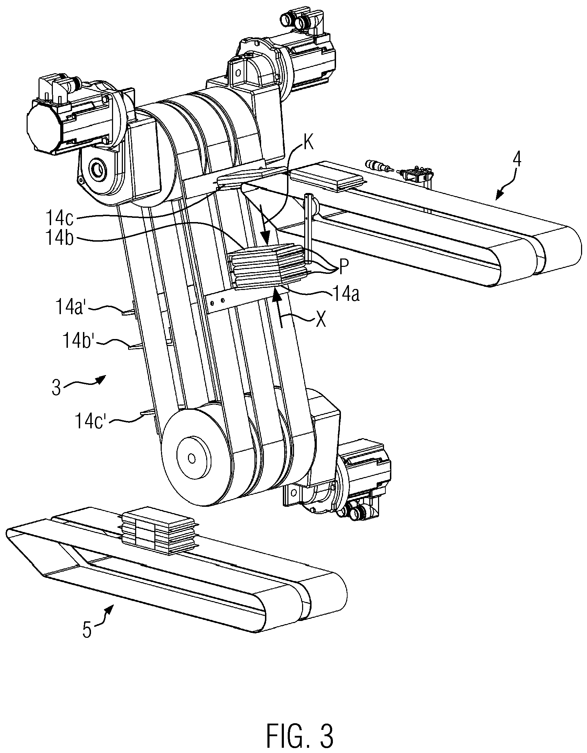

Figur 3 zeigt das Fördermodul 3 mit einer daran zwischen den Mitnehmern 14a, b aufgenommenen Gruppe drei einzelner übereinander auf Kontakt gestapelter Produkte P. Der dritte Mitnehmer 14c ist im Übergabebereich U geblieben, um dort zum Bilden einer neuen Gruppe von Produkten P zur Verfügung zu stehen.

Die beiden Fördereinheiten 10a, b werden gemäß Figur 3 derart angesteuert, dass die beiden Mitnehmer 14a, b die zwischen ihnen gestapelten Produkte P mittels eines vorbestimmten Drucks K zusammendrücken. Dafür drückt vorzugsweise der obere der beiden Mitnehmer 14a, b in Richtung des unteren Mitnehmers 14a. Dadurch lassen sich die Produkte P zwischen den Mitnehmern 14a, b für einen folgenden Etikettiervorgang am Etikettierer 8 zusammendrücken und gleichzeitig fixieren, weil die Mitnehmer 14a, b von einem im Betrieb der Fördereinheiten 10a, b zwischen ihnen vorliegenden ersten Abstand nach Aufnahme der Produkte P derart verfahren, dass sich zwischen ihnen ein zweiter Abstand x einstellt.

Für den Fall, dass die jeweiligen Produkte P einen forminstabilen, d.h. unregelmäßigen Packungsinhalt haben, können sich die jeweiligen Inhalte durch das Zusammendrücken der Mitnehmer 14a, b durch Formschluss von Produkt zu Produkt ausgeglichen, wodurch eine in der Bildebene der Figur 3 dargestellte stabile Oberfläche O für den Etikettiervorgang zur Verfügung steht. Die Oberfläche O ist im Wesentlichen plan ausgebildet und bietet eine ausreichend große Anklebefläche für das Etikett E.

Figur 3 zeigt auch, dass die auf der Rückseite des Fördermoduls 3 befestigten Mitnehmer 14a', b', c' momentan entsprechend den auf der Vorderseite des Fördermoduls 3 angeordneten Mitnehmern 14a, b, c spiegelverkehrt positioniert sind.

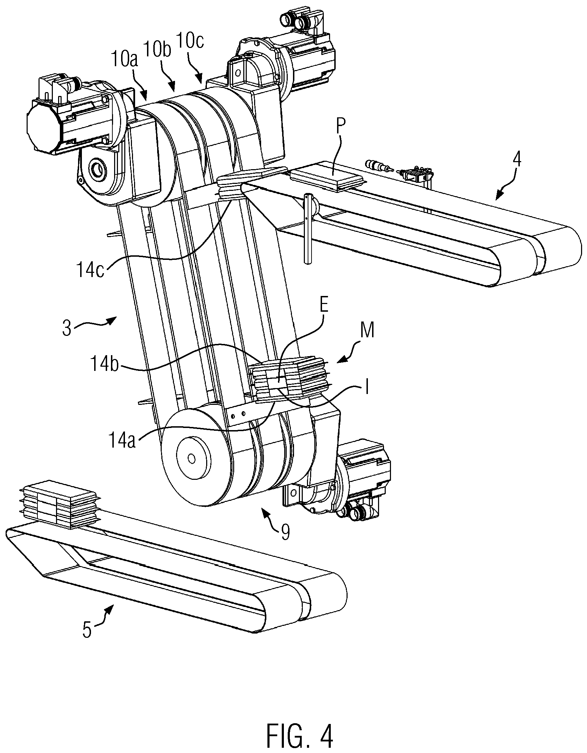

Figur 4 zeigt das Fördermodul 3 mit einem daran fertiggestellten Multipack M, bestehend aus drei einzelnen Produkten P, die durch das Etikett E (ein solches Etikett E ist vorzugsweise auch auf der gegenüberliegenden Stapelseite aufgebracht) miteinander zu einer Einheit verbunden sind. Dabei kann das die Produkte P verbindende Etikett E mindestens eine Perforierung I umfassen. Ferner zeigt Figur 4, dass der dritte Mitnehmer 14c immer noch im Übergabebereich U zur Aufnahme einzelner Produkte P zur Verfügung steht, um eine neue Gruppe von Produkten P zu bilden, wobei im Vergleich zu Figur 3 bereits zwei einzelne Produkte P darauf positioniert sind.

Ein Verfahren zur Herstellung jeweiliger eine Gruppe von Produkten P umfassender Multipacks M wird im Folgenden anhand der Figuren 2 bis 4 erläutert.

Allgemein wird gemäß den Figuren 2 bis 4 für die Herstellung eines Multipacks M zunächst eine Gruppe aus einer vorbestimmten Vielzahl von Produkten P mittels des Fördermoduls 3 gebildet. Anschließend wird die Gruppe von Produkten P für einen folgenden Etikettiervorgang fixiert. Dafür wird die Gruppe von Produkten P zusammengedrückt, wodurch insbesondere bei Produkten P mit forminstabilem Packungsinhalt ein Formschluss zwischen den auf Kontakt übereinander gestapelten Produkten P stattfindet, weil sich die darin enthaltenen forminstabilen Packungsinhalte gegenseitig ausgleichen. Durch das Zusammendrücken der Produkte P können diese sowohl fixiert werden als auch die stabile Andrückoberfläche O (siehe Figur 3) auf einer zum Etikettierer 8 (siehe Figur 1) hingewandten Seite der Gruppe von Produkten P ausbilden. Die Gruppe von Produkten P bleibt so lange zusammengedrückt, bis sie den Etikettierer 8 passiert hat, sodass der Etikettierer 8 die Gruppe von Produkten P im Durchlauf genau und ortsfest etikettieren kann.

Bei der Erfindung werden die jeweiligen Fördereinheiten 10a, b, c jeweils separat durch den jeweiligen Servomotor 13a, b, c angesteuert. Wie die Ansteuerung der Fördereinheiten 10a, b, c im Detail durchgeführt werden kann, wird im Folgenden beschrieben.

Figur 2 zeigt, dass sich im Übergabebereich U der Mitnehmer 14a in einer ersten Aufnahmeposition befindet, in welcher ein erstes Produkt P darauf abgelegt ist. Der Mitnehmer 14a verfährt aus der ersten Aufnahmeposition um eine Schrittweite nach unten in eine in Figur 4 gezeigte zweite Aufnahmeposition, damit auf dem zuvor abgelegten Produkt P ein weiteres Produkt P ablegbar ist. Der Betrieb des Zuführbands 4 ist dabei vom Betrieb der Fördereinheit 10a abhängig. Das schrittweise Verstellen des Mitnehmers 14a kann durch die am Ende des Zuführbands 4 angeordnete Lichtschranke 15 ausgelöst werden. Das schrittweise Verstellen des Mitnehmers 14a wird so oft wiederholt, bis die Gruppe von Produkten P vollständig ist, im vorliegenden Beispiel dreimal, bis insgesamt drei Produkte P auf dem Mitnehmer 14a abgelegt sind.

Gemäß Figur 2 sind die anderen beiden Mitnehmer 14b, c derart oberhalb des die Gruppe von Produkten P tragenden Mitnehmers 14a in einer Wartestellung positioniert, dass sie den Vorgang zum Bilden der Gruppe von Produkten P nicht stören. Die Mitnehmer 14b, c bleiben dort positioniert, bis die Gruppe auf dem Mitnehmer 14a vollständig ist. Ist dies der Fall, verfährt der Mitnehmer 14b nach unten, um die auf dem Mitnehmer 14a platzierte Gruppe von Produkten P von oben zu fixieren, z.B. indem er von oben mit einer vorbestimmten, einstellbaren Kraft K auf die Gruppe von Produkten P drückt oder indem die Mitnehmer 14a, 14b bis auf einen reduzierten, einstellbar vorgegebenen Abstand zusammengefahren sind, damit für den anschließenden Etikettiervorgang die stabile Oberfläche O ausgebildet wird.

Der dritte Mitnehmer 14c verfährt unterdessen in die erste Aufnahmeposition, damit darauf eine neue Gruppe von Produkten P gebildet werden kann. Der Mitnehmer 14c wird dann schrittweise, wie oben in Zusammenhang mit dem Mitnehmer 14a erläutert wurde, zum Bilden der neuen Gruppe von Produkten P verstellt.

Bezugnehmend auf Figur 3 wird die vollständige Gruppe von Produkten P für den folgenden Etikettiervorgang zum Herstellen des Multipacks M zwischen den Mitnehmern 14a, b zusammengedrückt. Weiter oben wird auf dem Mitnehmer 14c unabhängig vom Betrieb der Mitnehmer 14a, b eine neue Gruppe von Produkten P gebildet.

Figur 4 zeigt den hergestellten Multipack M nach dem Etikettiervorgang. Der Multipack M wird dabei immer noch zwischen den Mitnehmern 14a, b am Fördermodul 3 gehalten. Im Umlenkbereich 9 oberhalb des Abführbands 5 öffnet sich die durch die Mitnehmer 14a, b gebildete Fixierung selbsttätig durch Auseinanderklaffen, sodass der fertige Multipack M vom Fördermodul 3 auf das darunter positionierte Abführband 5 fällt und abtransportiert werden kann.

Nachdem ein fertiger Multipack M vom Fördermodul 3 an das Abführband 5 abgegeben ist, können die entsprechenden Fördereinheiten 10a, b derart angesteuert werden, dass die in Figur 3 auf der Rückseite des Fördermoduls 3 befestigten Mitnehmer 14a', b' für den neuen Stapelvorgang in den Übergabebereich U in die Wartestellung nachrücken, um für den Herstellungsprozess eines neuen Multipacks M zur Verfügung zu stehen. Dafür wirken die Mitnehmer 14a', c zum Bilden und Bereitstellen der neuen Gruppe von Produkten P zusammen, während der Mitnehmer 14b' zum Bilden eines folgenden neuen Stapels zur Verfügung steht.

Prinzipiell lässt sich das Funktionsprinzip der Mitnehmer 14a, a', b, b', c, c' gemäß den Figuren 2 bis 4 wie folgt beschreiben.

Die jeweiligen Fördereinheiten 10a, b, c werden derart gesteuert, dass
- einer der Mitnehmer 14a, b, c zum Bilden der Gruppe von Produkten P entsprechend der Anzahl an Produkten P für den herzustellenden Multipack M aus einer ersten Aufnahmeposition heraus schrittweise nach unten gefahren wird,
- bei Vervollständigung der Gruppe auf dem Mitnehmer 14a schließt ein folgender Mitnehmer 14b zur Gruppe hin auf und drückt von oben auf die Gruppe von Produkten P, damit diese zwischen den beiden Mitnehmern 14a, b zusammengedrückt und fixiert werden,
- ein weiterer, dem auf die Gruppe von oben drückenden Mitnehmer 14b folgender Mitnehmer 14c verfährt in die erste Aufnahmeposition, um für das Bilden einer neuen Gruppe von Produkten P zur Verfügung zu stehen,
- die zwischen den Mitnehmern 14a, b zusammengehaltene Gruppe von Produkten P fährt zum Etikettierer 8, welcher das Etikett E darauf anbringt, wodurch ein Multipack M hergestellt wird, wobei währenddessen die neue Gruppe von Produkten P auf dem Mitnehmer 14c Schritt für Schritt gebildet wird,
- der Multipack M wird vom Fördermodul 3 abgegeben, was zur Folge hat, dass die zwei Mitnehmer 14a', b' in den Übergabebereich U in die Wartestellung nachrücken können, wobei der Mitnehmer 14a' mit dem Mitnehmer 14c zum Zusammendrücken und Fixieren der neuen Gruppe von Produkten P interagiert, sobald die dazwischen neu gebildete Gruppe von Produkten P vollständig ist, und wobei der Mitnehmer 14b' zum Bilden einer weiteren neuen Gruppe von Produkten P in die erste Aufnahmeposition fährt, wenn die Mitnehmer 14c, 14a' aus dem Übergabebereich U heraus in Richtung zum Etikettierer 8 gefahren sind.

Die oberen Schritte sind beliebig oft wiederholbar, sodass durchlaufend Multipacks M hergestellt werden.

Die erfindungsgemäße Vorrichtung sowie das erfindungsgemäße Verfahren sind sehr flexibel einsetzbar. Insbesondere können damit sowohl Produkte mit formstabilem Inhalt als auch Produkte mit forminstabilem Inhalt präzise zu Multipacks M gruppiert werden. Hinzu kommt, dass bei sich größenändernden Produkten P für die Herstellung der Multipacks M Umstellarbeiten am Fördermodul 3 nicht notwendig sind. Außerdem lassen sich beliebige Stapelgrößen für die Multipacks M herstellen.

## Patentansprüche

1. Etikettiermaschine (1) zur Herstellung jeweiliger eine Gruppe von Produkten (P) umfassender Multipacks (M), wobei die Etikettiermaschine (1) eine Fördervorrichtung (2) mit einem Fördermodul (3) zum Bilden einer Gruppe aus einer vorbestimmten Vielzahl von Produkten (P) und zum Bereitstellen der Gruppe von Produkten (P) für einen Etikettiervorgang zur Herstellung eines Multipacks (M) umfasst, und wobei die Etikettiermaschine (1) mindestens einen Etikettierer (8) umfasst, wobei das Fördermodul (3) dazu ausgebildet ist, die Gruppe von Produkten (P) dem Etikettierer (8) für den Etikettiervorgang bereitzustellen, **dadurch gekennzeichnet, dass** das Fördermodul (3) über mindestens zwei Fördereinheiten (10a, b) verfügt, die jeweils mindestens einen Mitnehmer (14a, b) umfassen, wobei die Fördereinheiten (10a, b) derart einzeln ansteuerbar sind, dass zwei zu unterschiedlichen Fördereinheiten (10a, b) gehörige Mitnehmer (14a, b) zum Bereitstellen der Gruppe von Produkten (P) für den Etikettiervorgang als eine Fixierung zusammenwirken.

2. Etikettiermaschine nach Anspruch 1, **dadurch gekennzeichnet, dass** die beiden Mitnehmer (14a, b) als Parallelgreifer zusammenwirken und dazu ausgebildet sind, zum Bereitstellen der Gruppe von Produkten (P) für den Etikettiervorgang die Gruppe von Produkten (P) mittels Kraftpaarung zusammenzuhalten.

3. Etikettiermaschine nach Anspruch 1 oder 2, **dadurch gekennzeichnet, dass** zum Bereitstellen der Gruppe von Produkten (P) für den Etikettiervorgang ein im Betrieb der Fördereinheiten (10a, b) zwischen den Mitnehmern (14a, b) vorliegender erster Abstand derart zu einem zweiten Abstand (x) reduzierbar ist, dass ein Halten der Gruppe von Produkten (P) zwischen den Mitnehmern (14a, b) durch das Ausüben eines Druckes (K) auf die Gruppe von Produkten (P) herstellbar ist.

4. Etikettiermaschine nach einem der vorigen Ansprüche, **dadurch gekennzeichnet, dass** die Fördereinheiten (10a, b) Seite an Seite zueinander angeordnet sind, wobei jeweilige Förderrichtungen (Fa, b) der Fördereinheiten (10a, b) für den Transport der Gruppe von Produkten (P) zueinander parallel sind.

5. Etikettiermaschine nach einem der vorigen Ansprüche, **dadurch gekennzeichnet, dass** das Fördermodul (3) eine weitere dritte Fördereinheit (10c) mit mindestens einem Mitnehmer (14c) umfasst, wobei eine Förderrichtung (Fc) der dritten Fördereinheit (10c) zu den jeweiligen Förderrichtungen (Fa, b) der anderen Fördereinheiten (10a, b) parallel ist.

6. Etikettiermaschine nach einem der vorigen Ansprüche, **dadurch gekennzeichnet, dass** die Etikettiermaschine (1) eine Steuervorrichtung (16) umfasst, die dazu konfiguriert ist, die Fördereinheiten (10a, b, c) unabhängig zueinander anzusteuern.

7. Etikettiermaschine nach einem der vorigen Ansprüche, **dadurch gekennzeichnet, dass** die Fördereinheiten (10a, b, c) jeweils zwei Mitnehmer (14a, a', b, b', c, c') umfassen.

8. Etikettiermaschine nach einem der vorigen Ansprüche, **dadurch gekennzeichnet, dass** die Fördereinheiten (10a, b, c) jeweils einen endlosen Zahnriemen (11a, b, c) sowie jeweils ein Paar Führungsrollen (12a, b, c) zum Spannen und Führen der jeweiligen Zahnriemen (11a, b, c) umfassen.

9. Etikettiermaschine nach einem der vorigen Ansprüche, **dadurch gekennzeichnet, dass** die Fördereinheiten (10a, b, c) des Fördermoduls (3) jeweils mit einem eigenen Servomotor (13a, b, c) ausgestattet sind.

10. Etikettiermaschine nach einem der vorigen Ansprüche, **dadurch gekennzeichnet, dass** das Fördermodul (3) schräggestellt angeordnet ist, sodass die jeweiligen Förderrichtungen (Fa, b, c) der Fördereinheiten (10a, b, c) in vertikaler Projektionsebene betrachtet einen spitzen Winkel zur Horizontalen einschließen, insbesondere einen Winkel zwischen 60° und 80°.

11. Etikettiermaschine nach einem der vorigen Ansprüche, **dadurch gekennzeichnet, dass** die Fördervorrichtung (2) ein Zuführband (4) zum Bestücken des Fördermoduls (3) mit den Produkten (P) und/oder ein Abführband (5) zum Abtransport des hergestellten Multipacks (M) umfasst.

12. Etikettiermaschine nach Anspruch 11, **dadurch gekennzeichnet, dass** ein unterer Umlenkbereich (9) des Fördermoduls (3) in horizontaler Projektionsebene betrachtet zumindest abschnittsweise oberhalb des Abführbands (5) positioniert ist.

13. Etikettiermaschine nach einem der vorigen Ansprüche, **dadurch gekennzeichnet, dass** zumindest abschnittsweise eine Führung (F) entlang des Fördermoduls (3) zum Führen der Produkte (P) angeordnet ist.

14. Verfahren zum Herstellen jeweiliger eine Gruppe von Produkten (P) umfassender Multipacks (M) mittels einer Etikettiermaschine (1), umfassend die folgenden Schritte:
• Bilden einer Gruppe aus einer vorbestimmten Vielzahl von Produkten (P) mittels eines Fördermoduls (3),
• Bereitstellen der Gruppe von Produkten (P) mittels des Fördermoduls (3) für einen Etikettiervorgang zur Herstellung eines Multipacks (M), wobei zwei Fördereinheiten (10a, b, c) des Fördermoduls (3) einzeln derart angesteuert werden, dass zwei zu unterschiedlichen Fördereinheiten (10a, b) gehörige Mitnehmer (14a, b) zum Bereitstellen der Gruppe von Produkten (P) für den Etikettiervorgang als eine Fixierung zusammenwirken.

15. Verfahren nach Anspruch 14, **dadurch gekennzeichnet, dass** die beiden Mitnehmer (14a, b) mittels Kraftpaarung die Gruppe von Produkten (P) greifen, sodass sich ein forminstabiler Inhalt von Produkt zu Produkt mittels Formschluss ausgleichen kann, wodurch sich die Produkte (P) gegenseitig innerhalb der Gruppe Stabilität geben.
